# EUROPÄISCHE PATENTANMELDUNG

(11) **EP 3 290 812 A1**
(43) Veröffentlichungstag der Anmeldung: **07.03.2018**
(21) Anmeldenummer: 17160911.8
(22) Anmeldetag: 14.03.2017
(51) Int. Cl.: F24C 15/20

(54) **FILTERKASSETTEN-BEFESTIGUNGSVORRICHTUNG**

(30) Priorität: 01.09.2016 DE 102016116379
(71) Anmelder: ADEK Bauteile GmbH, 40699 Erkrath (DE)
(72) Erfinder: Kurek, Michael, 40699 Erkrath (DE); Rückert, Wilfried, 75045 Walzbachtal (DE); Eckwert, Klemens, 40764 Langenfeld (DE)
(74) Vertreter: Fischer & Konnerth

(57) **Zusammenfassung**

Die Erfindung betrifft eine Filterkassetten-Befestigungsvorrichtung zum lösbaren Festlegen einer Filterkassette (2) an einer Dunstabzugshaube (1), wobei die Filterkassetten-Befestigungsvorrichtung zumindest ein an einem Filterkassettenrahmen (3) insbesondere vorstehend angeordnetes Eingriffsteil (12) und die Dunstabzugshaube (1) eine Aufnahme (25) aufweist, die das Eingriffsteil (12) beim Einsetzen der Filterkassette (2) an der Dunstabzugshaube (1) aufnimmt, dadurch gekennzeichnet,
dass die Filterkassetten-Befestigungsvorrichtung eine Rasteinrichtung (15) aufweist, die das Eingriffsteil (12; 34; 44; 52; 70) mit beim Einsetzen und beim Entnehmen der Filterkassette (2) zu überwindender Rastkraft an der Aufnahme (25; 36) an der Dunstabzugshaube (1) in Raststellung hält.

## Beschreibung

Die Erfindung betrifft eine Filterkassetten-Befestigungsvorrichtung, mit der eine Filterkassette an einer Dunstabzugshaube lösbar festlegbar ist, wobei die Filterkassetten-Befestigungsvorrichtung zumindest ein an einem Filterkassettenrahmen insbesondere vorstehend angeordnetes Eingriffsteil und die Dunstabzugshaube eine Aufnahme aufweist, die das Eingriffsteil beim Einsetzen der Filterkassette an der Dunstabzugshaube aufnimmt.

Solche Filterkassetten von Dunstabzugshauben enthalten Filter, die z. B. aus Streckmetall hergestellt sind. Die Filterkassetten werden üblicherweise - vom Anwender aus gesehen - vorne und hinten an einem Rahmen der Dunstabzugshaube befestigt. Hinten wird die Filterkassette an einem Gehäuserahmen der Dunstabzugshaube eingehängt und vorne über einen mechanischen Verschlussmechanismus arretiert. Soll die Filterkassette z. B. zum Reinigen des Filters ausgebaut werden, so wird der mechanische Verschlussmechanismus geöffnet. Wenn die Filterkassette dabei nicht festgehalten wird, könnte sie nach unten kippen und im ungünstigsten Fall aus der hinteren Aufhängung fallen. Deshalb haben einige Hersteller von Dunstabzugshauben Vorkehrungen getroffen, die ein unbeabsichtigtes Herunterfallen der Filterkassette verhindern. So zeigt die DE 102 08 475 A1, dass die hintere Aufhängung mit Haken so konstruiert sein kann, dass zwar die Filterkassette um einen Winkel von etwa 90° herabschwenken kann, aber nicht herunterfallen kann. Die Filterkassette muss dann manuell im senkrechten Zustand aus der Aufhängung gehoben werden. Diese Lösung hat aber den Nachteil, dass bei einem unkontrollierten Herunterschwenken die Filterkassette über den 90°-Winkel hinaus schwingt und die Aufhängung an der Filterkassette und/oder an der Dunstabzugshaube verbogen oder beschädigt wird. Außerdem können unter der Dunstabzugshaube stehende Gegenstände umgestoßen werden, wobei diese Gegenstände und eventuell auch ein Glaskeramikfeld des unter der Dunstabzugshaube angeordneten Herds beschädigt werden können.

Eine andere Möglichkeit, ein Herunterfallen der Filterkassette zu verhindern, besteht in der Anbringung einer Abstützung in der Art einer Lasche. Diese verhindert zwar, dass der vordere Teil der Filterkassette nach unten kippt, aber sobald man die Filterkassette nach vorne zieht, könnte der hintere Teil der Filterkassette unbeabsichtigt nach unten kippen, wenn der Anwender die Filterkassette nicht entsprechend festhält.

Aufgabe der vorliegenden Erfindung ist es, eine eingangs genannte Filterkassetten-Befestigungsvorrichtung bereitzustellen, mit der das Einsetzen und Entnehmen der Filterkassette an die bzw. von der Dunstabzugshaube verbessert ist.

Die Aufgabe wird durch eine Filterkassetten-Befestigungsvorrichtung mit den Merkmalen des Anspruchs 1 gelöst.

Vorteilhafte Ausgestaltungen der Erfindung sind in den abhängigen Ansprüchen angegeben.

Dadurch, dass die Filterkassetten-Befestigungsvorrichtung eine Rasteinrichtung aufweist, die das Eingriffsteil mit beim Einsetzen und beim Entnehmen der Filterkassette zu überwindender Rastkraft an der Aufnahme an der Dunstabzugshaube in Raststellung hält, muss der Anwender oder Benutzer die Filterkassette beim Filterkassettenwechsel bewusst mit höherer Kraft fassen, wodurch ein ungewolltes Herabschwenken oder Herabfallen der Filterkassette und damit auch ansonsten mögliche Beschädigungen verhindert werden. Auch wenn die Filterkassette unbeabsichtigt herabschwenken sollte, so wird jedenfalls durch die Rasteinrichtung verhindert, dass die Filterkassette gänzlich herabfallen kann. Als Rasteinrichtung wird jede Einrichtung bezeichnet, die eine Rast- oder Haltkraft aufbringen kann. Als Aufnahme an der Dunstabzugshaube wird jegliche Einrichtung zum lösbaren Anbringen der Filterkassette oder eines Eingriffsteils der Filterkassette, das insbesondere an einem Filterkassettenrahmen angeordnet ist, bezeichnet. Besonders bevorzugt ist es demnach, wenn die Rasteinrichtung insbesondere zusammen mit dem Eingriffsteil eine gelenkige Lagerung der Filterkassette bzw. des Filterkassettenrahmens an der Dunstabzugshaube bereitstellt. Die gelenkige Lagerung stellt insbesondere eine Schwenklagerung der Filterkassette an der Dunstabzugshaube dar.

Das Eingriffsteil kann am Filterkassettenrahmen vorstehend angeordnet sein, so dass es beim Einsetzen der Filterkassette an der Dunstabzugshaube in einfacher Weise von der Bedienperson, zweckmäßigerweise auch in Sichtkontakt, in die Aufnahme an der Dunstabzugshaube eingesetzt werden kann. Andererseits kann das Eingriffsteil am Filterkassettenrahmen auch eingesetzt oder versenkt angeordnet sein, so dass es nicht vom Filterkassettenrahmen gegen die Aufnahme an der Dunstabzugshaube vorsteht, wobei die Aufnahme in diesem Fall auch von der Dunstabzugshaube vorstehen kann und z. B. als Aufnahmesteg oder Aufnahmezunge gebildet sein kann.

Zweckmäßigerweise ist die die Rastkraft bereitstellende Rasteinrichtung an einem hinteren Rahmenteil des Filterkassettenrahmens am Hinterrand der Filterkassette angeordnet. Dann kann eine solche eine Rasteinrichtung aufweisende Filterkassette an einer Aufnahme oder Halterung der Dunstabzugshaube anstelle einer herkömmlichen Filterkassette, die eine solche Rasteinrichtung nicht aufweist, verwendet werden. Die Rasteinrichtung kann jedoch auch gänzlich oder überwiegend an der Dunstabzugshaube angeordnet sein. Gleichfalls kann die Rasteinrichtung oder können Teile der Rasteinrichtung sowohl an der Filterkassette wie auch an der Dunstabzugshaube angeordnet sein.

In bevorzugter Gestaltung enthält die Filterkassette an ihrem Hinterrand zwei oder mehrere voneinander beabstandete Eingriffsteile mit jeweiliger Rasteinrichtung.

In bevorzugter Gestaltung enthält die Rasteinrichtung zumindest eine Federeinrichtung oder zumindest ein Federelement, die oder das beim Rastvorgang federelastisch verformt wird. Die Federeinrichtung kann beispielsweise aus Metall oder aus Kunststoff hergestellt sein und z. B. zwei zum Eingriffsteil symmetrisch angeordnete Federschenkel aufweisen.

Zweckmäßigerweise ist die Rasteinrichtung am Eingriffsteil der Filterkassette vorgesehen oder gebildet und insbesondere ist das Eingriffsteil mit der Rasteinrichtung einstückig gebildet. Das Eingriffsteil ist z. B. ein Kunststoff-Spritzgussteil mit angespritzten Federelementen oder Federschenkeln. Das Eingriffsteil kann auch selbst als Rastelement federelastisch gebildet sein und kann auch aus Metall hergestellt sein.

In bevorzugter Gestaltung ist das Eingriffsteil mit der Rasteinrichtung am Filterkassettenrahmen, insbesondere in einer Ausnehmung oder Öffnung des Filterkassettenrahmens, angebracht. Das Eingriffsteil ist z. B. in die Ausnehmung oder Öffnung eingesteckt und darin formschlüssig gehalten, z. B. mittels zumindest einem Haltesteg oder dergleichen, und kann zusätzlich z. B. durch Verkleben befestigt sein.

Andererseits kann die Rasteinrichtung eine an einem Gehäuserahmen der Dunstabzugshaube angeordnete Federeinrichtung aufweisen, die z. B. mit Haltenasen eines Eingriffsteils oder einer Lasche am Filterkassettenrahmen zusammenwirkt.

In bevorzugter Gestaltung weist die Rasteinrichtung eine Blattfeder oder eine Bügelfeder auf, die an einem jeweiligen Eingriffsteil gelagert sind. Dabei ist es besonders bevorzugt, wenn die beiden Eingriffsteile für die Blattfeder und die Bügelfeder gleichartig gebildet sind. Die gleichartige Gestaltung betrifft insbesondere die Lagerung oder Befestigung der Blattfeder und der Bügelfeder am Eingriffsteil.

Dadurch, dass zweckmäßigerweise beim Einsetzen und beim Entnehmen der Filterkassette die Rastkraft der Rasteinrichtung durch eine Längsbewegung der Filterkassette zu überwinden ist, ist keine zusätzliche Art einer Betätigung der Rasteinrichtung erforderlich.

Gemäß einer besonders bevorzugten Ausführungsform ist eine Abstützung und insbesondere eine Stützlasche vorgesehen, die eine Schwenkbewegung der mit ihrem hinteren Rahmenteil an der Aufnahme angeordneten Filterkassette bei deren Einsetzen oder Entnehmen an der Dunstabzugshaube relativ zur Dunstabzugshaube durch Stützeingriff am Eingriffsteil begrenzt. Erst nachdem die Rastkraft bei einer Längsbewegung der in ihrer Schwenkstellung gehaltenen Filterkassette überwunden worden ist, kann die Filterkassette von der Dunstabzugshaube entnommen werden und in umgekehrtem Bewegungsablauf an der Dunstabzugshaube eingesetzt werden. Die Abstützung oder Stützlasche ist insbesondere an der Dunstabzugshaube angeordnet.

Nachfolgend wird eine erfindungsgemäße Filterkassetten-Befestigungsvorrichtung anhand von Ausführungsbeispielen unter Bezugnahme auf die Zeichnung näher erläutert. Es zeigt:
- Fig. 1: in einer perspektivischen Ansicht in schematischer Darstellung eine Dunstabzugshaube mit einer Filterkassette, die beim Einsetzen an die Dunstabzugshaube dargestellt ist;
- Fig. 2: in einer perspektivischen Ansicht eine Unterseite der Filterkassette, die an einem Vorderrand einen Handgriff und an einem Hinterrand an einem hinteren Filterkassettenrahmen angeordnete Teile einer Befestigungsvorrichtung aufweist;
- Fig. 3: in einer perspektivischen Ansicht einen Ausschnitt eines Gehäuserahmens der Dunstabzugshaube mit einer daran mittels einer Befestigungsvorrichtung festgelegten Filterkassette;
- Fig. 4: in einer Querschnittsansicht den in Fig. 3 dargestellten Gehäuserahmen der Dunstabzugshaube mit dem Filterkassettenrahmen und der Befestigungsvorrichtung;
- Fig. 5: in einer perspektivischen Ansicht einen Abschnitt des Filterkassettenrahmens und ein daran anzubringendes Eingriffsteil;
- Fig. 6: in einer perspektivischen Ansicht gemäß Fig. 5 den Abschnitt des Filterkassettenrahmens mit dem daran angebrachten Eingriffsteil;
- Fig. 7: in einer perspektivischen Ansicht gemäß Fig. 6 einen Abschnitt des Filterkassettenrahmens mit einem weiteren Ausführungsbeispiel einer Befestigungsvorrichtung;
- Fig. 8: in einer perspektivischen Ansicht gemäß Fig. 7 einen Abschnitt des Filterkassettenrahmens mit einem weiteren Ausführungsbeispiel einer Befestigungsvorrichtung;
- Fig. 9: in einer perspektivischen Ansicht gemäß Fig. 3 einen Ausschnitt des Gehäuserahmens der Dunstabzugshaube mit einer daran mittels eines weiteren Ausführungsbeispiels eines Eingriffsteils festgelegten Filterkassette;
- Fig. 10: in einer perspektivischen Ansicht das Eingriffsteil der Filterkassette der Fig. 9 in Alleinstellung und in Anordnung am Filterkassettenrahmen;
- Fig. 11: in einer Querschnittsansicht den in Fig. 9 dargestellten Gehäuserahmen der Dunstabzugshaube mit dem mittels des Eingriffsteils befestigten Filterkassettenrahmen;
- Fig. 12: in einer perspektivischen Ansicht einen Abschnitt des Filterkassettenrahmens mit einem weiteren Ausführungsbeispiel eines Eingriffselements der Befestigungsvorrichtung;
- Fig. 13: in einer perspektivischen Ansicht das Eingriffsteil der Filterkassette der Fig. 12 mit einer Blattfeder als Rasteinrichtung;
- Fig. 14: in einer perspektivischen Ansicht die Blattfeder des Eingriffsteils der Fig. 13;
- Fig. 15: in einer Querschnittsansicht gemäß Schnittlinie A - A in Fig. 13 das Eingriffsteil der Fig. 13 mit daran angebrachter Blattfeder;
- Fig. 16: in einer perspektivischen Ansicht einen Abschnitt des Filterkassettenrahmens mit einem weiteren Ausführungsbeispiel eines Eingriffselements mit einer Bügelfeder als Rasteinrichtung; und
- Fig. 17: in einer perspektivischen Ansicht das Eingriffsteil der Filterkassette der Fig. 16 mit der Bügelfeder sowie die Bügelfeder in Alleinstellung.

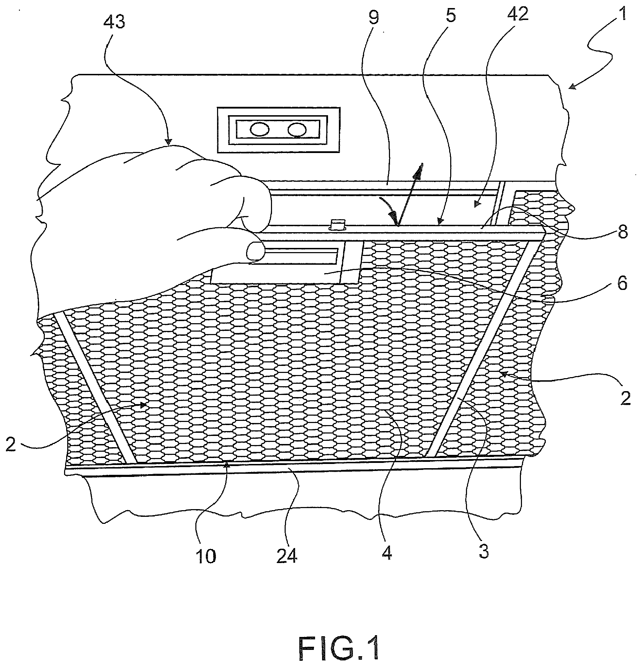

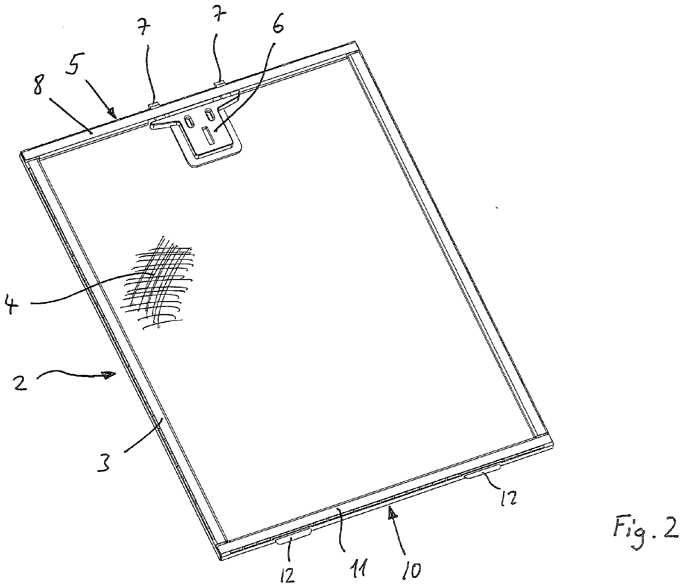

Eine Dunstabzugshaube 1 (siehe Fig. 1) oder Schrägesse, wie sie üblicherweise über Kochstellen in Küchen angeordnet ist, weist zumindest eine Filterkassette 2 auf (Fig. 1), die einen beispielsweise rechteckigen Filterkassettenrahmen 3 enthält (Fig. 2), der z. B. aus Aluminium oder aus rostfreiem Stahl oder dergleichen und im Querschnitt insbesondere U-förmig hergestellt ist. Der Filterkassettenrahmen 3 hält als Filtermedium z. B. mehrere Streckmetalllagen 4 sowie ggfs. auch Filtergewebe. Die Filterkassette 2 ist für den Einsatz im Bereich einer Ansaugfläche 42 der Dunstabzugshaube 1 oder Schrägesse vorgesehen.

Die Filterkassette 2 weist an ihrem einer Bedienperson zugewandten Vorderrand 5 einen Handgriff 6 auf, der manuell (siehe Hand 43 in Fig. 1) gegen Federkraft in Richtung einer Entriegelungsstellung verschiebbar gelagert ist und mit dem in bekannter Weise z. B. zwei Riegelzapfen 7 betätigbar sind, die am vorderen Rahmenteil 8 des Filterkassettenrahmens 3 durch Bewegen des Handgriffs 6 ein- und ausfahrbar sind und als Teil einer Filterkassetten-Befestigungsvorrichtung in lösbarem Eingriff an einem vorderen Gehäuserahmen 9 der Dunstabzugshaube 1 festlegbar sind. Die Filterkassette 2 weist an ihrem Hinterrand 10 an einem hinteren Rahmenteil 11 des Filterkassettenrahmens 3 zumindest ein Eingriffsteil 12 auf (Fig. 2 zeigt schematisch zwei Eingriffsteile 12), das vom hinteren Rahmenteil 11 vorsteht.

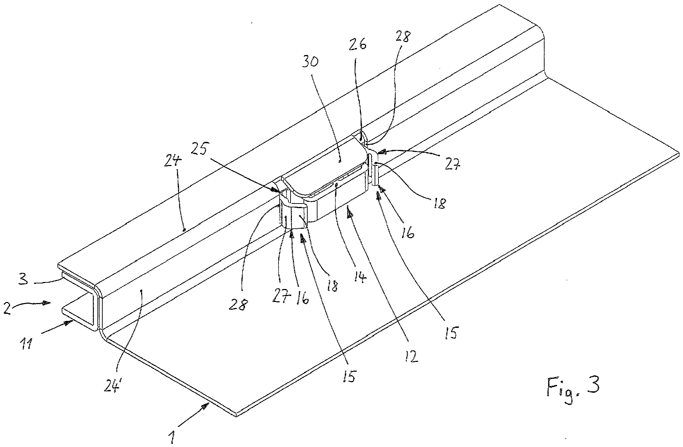

In den Fig. 3 bis 6 ist eine erste Ausführungsform einer erfindungsgemäßen Befestigungsvorrichtung dargestellt. Das Eingriffsteil 12 ist in Gestalt einer Eingriffs- oder Rastnase mit einer Basis 13, die z. B. als eine rechteckige Platte gebildet ist, und mit einem zentralen Teil 14 gebildet, das von der Basis 13 vorsteht. Das Eingriffsteil 12 ist insbesondere ein Kunststoff-Spritzgussteil. Eine Rasteinrichtung 15 weist z. B. zwei Federschenkel 16 auf, die von der Basis 13 ausgehend sich gegenüber liegend beidseits beabstandet neben dem zentralen Teil 14 angeordnet sind und sich bis in etwa auf Höhe der Stirnseite 17 des zentralen Teils 14 erstrecken. Die Federschenkel 16, die insbesondere einstückig mit der Basis 13 und somit mit dem Eingriffsteil 12 gebildet sind, sind vom zentralen Teil 14 weg nach außen ausgebaucht und weisen jeweils einen zum zentralen Teil 14 geneigten Vorderabschnitt 18 auf. Die beiden zueinander geneigten Vorderabschnitte 18 bilden einen Montage- oder Zentrierkonus der Rasteinrichtung bzw. am Eingriffsteil 12.

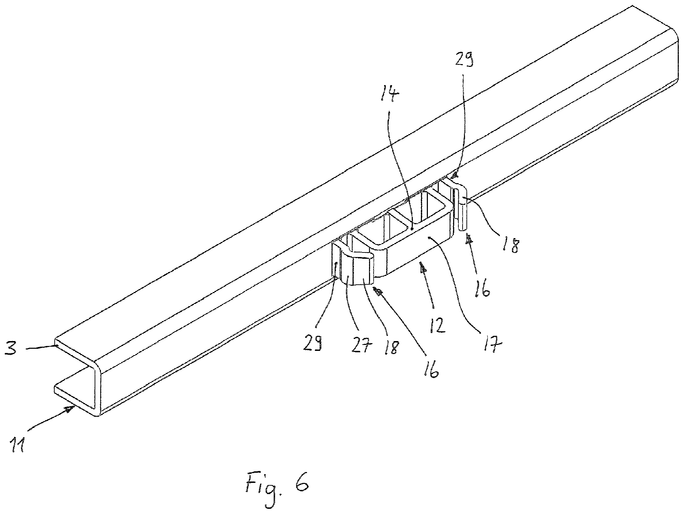

Das hintere Rahmenteil 11 des Filterkassettenrahmens 3 enthält in seiner Stirnwand 19 für jedes Eingriffsteil 12 eine Öffnung 20, deren Rechteckfläche zur im Wesentlichen spielfreien Aufnahme des hindurchgesteckten Eingriffsteils 12 einschließlich der beiden Federschenkel 16 angepasst ist. Die Basis 13 bzw. die rechteckige Platte steht über das Eingriffsteil 12 einschließlich der beiden Federschenkel 16 seitlich hinaus und bildet einen Anlagebund 21, der am hinteren Rahmenteil 11 innenseitig anliegt. Am hinteren Rahmenteil 11 kann an der Öffnung 20 eine Halteeinrichtung vorgesehen sein, die z. B. zwei Haltestege 22 enthält, die vom hinteren Rahmenteil 11 in die Öffnung 20 vorstehen. Die Haltestege 22 greifen in zugeordnete Vertiefungen 23 am Eingriffsteil 12 ein und halten dieses am hinteren Rahmenteil 11 fest geklemmt, wenn es in die Öffnung 20 eingesetzt oder eingedrückt ist (Fig. 6). Das Eingriffsteil 12 kann zusätzlich zu dieser Befestigung am hinteren Rahmenteil 11 auch verklebt oder anderweitig befestigt sein, z. B. verschraubt.

Das Anbringen oder Einsetzen der Filterkassette 2 an der Dunstabzugshaube 1 erfolgt, indem die Filterkassette 2 mit ihrem Hinterrand 10 gegen einen hinteren Gehäuserahmen 24 der Dunstabzugshaube 1 geführt wird, der die Ansaugfläche rückseitig begrenzt. Die Filterkassette 2 wird dabei in einer zur Ansaugfläche leicht geneigten Stellung gehalten (siehe Fig. 1), z. B. unter einem Winkel von etwa 15° zur Ansaugfläche. Beim Annähern des hinteren Rahmenteils 11 der Filterkassette 2 an den hinteren Gehäuserahmen 24 der Dunstabzugshaube 1 werden die beiden Eingriffsteile 12 mit einer jeweiligen Aufnahme 25 am hinteren Gehäuserahmen 24 der Dunstabzugshaube 1 in Eingriff gebracht. Die Aufnahme 25 enthält eine im wesentlichen rechteckige Gehäuserahmenöffnung 26 in einer senkrecht zur Ansaugfläche stehenden Gehäuserahmenwand 24', durch die das Eingriffsteil 12 hindurch gesteckt wird und die in Richtung der Ebene der Filterkassette 2 eine solche Breite aufweist, die geringer ist als die größte Breite des Eingriffsteils 12 zwischen seinen beiden Federschenkeln 16 an deren Ausbauchungen 27. Die geneigten Vorderabschnitte 18 der beiden Federschenkel 16 bilden einen Montage- oder Zentrierkonus, der anfangs mit Spiel in Richtung der Ebene der Filterkassette 2 das Einführen in die rechteckige Gehäuserahmenöffnung 26 erleichtert. Beim weiteren Einführen des Eingriffsteils 12 in die Gehäuserahmenöffnung 26 werden die beiden sich bauchig erweiternden Federschenkel 16, die zunächst mittels eines Spaltes von dem zentralen Teil 14 des Eingriffsteils 12 getrennt sind, von den beiden die Gehäuserahmenöffnung 26 begrenzenden Rändern 28 des hinteren Gehäuserahmens 24 federelastisch gegen den zentralen Teil 14 des Eingriffsteils 12 gedrückt, so dass das Eingriffsteil 12 mit den beiden Federschenkeln 16 durch die Gehäuserahmenöffnung 26 gesteckt werden kann. Nach dem vollständigen Einstecken des Eingriffsteils 12, das z. B. beim Anlegen des hinteren Rahmenteils 11 des Filterkassettenrahmens 3 an die Gehäuserahmenwand 24' der Dunstabzugshaube 1 erreicht ist, liegen die Federschenkel 16, die sich wieder in ihre Ausgangsstellung zurück verformt haben, mit ihren Basisabschnitten 29 an den Rändern 28 der Gehäuserahmenwand 24' des hinteren Gehäuserahmens 24 im Wesentlichen spielfrei an und halten die Filterkassette 2 mittels der Rasteinrichtung am hinteren Gehäuserahmen 24 befestigt. Die Filterkassette 2 wird anschließend mit ihrem Vorderrand 5 an den vorderen Gehäuserahmen 9 der Dunstabzugshaube 1 in ihre Einbaustellung geschwenkt und mit dem Handgriff 6 bzw. den Riegelzapfen 7 daran verrastet. Damit ist die Filterkassette 2 mittels der Filterkassetten-Befestigungsvorrichtung an der Dunstabzugshaube 1 befestigt und für ihren Einsatz im Bereich an der Ansaugfläche 42 der Dunstabzugshaube 1 bereit. Das Entnehmen der Filterkassette 2 von der Dunstabzugshaube erfolgt in entgegen gesetztem Bewegungsablauf (in Fig. 1 zeigen die zwei Pfeile am vorderen Rahmenteil 8 des Filterkassettenrahmens 3 die Schwenkbewegung und die Längsbewegung der Filterkassette 2).

Die Gestalt und Anordnung der Federschenkel 16 kann auch derart sein, dass sie nicht nur ohne eigene Verformung federelastisch gegen den zentralen Teil 14 des Eingriffsteils 12 gedrückt werden, sondern dass sie sich zusätzlich auch insbesondere in ihrem ausbauchenden Abschnitt oder ihrer Ausbauchung 27 elastisch verformen, während sie durch die Gehäuserahmenöffnung 26 im Kontakt mit den Rändern 28 des hinteren Gehäuserahmens 24 gesteckt werden. Die Verformungs- oder Rastkraft kann somit auch durch die Gestaltung der Ausbauchung 27 wie auch durch die Wahl eines geeigneten federelastischen Materials beeinflusst und eingestellt werden.

Mit der erfindungsgemäßen Filterkassetten-Befestigungsvorrichtung ist es somit erforderlich, die Filterkassette 2 zum Überwinden des Verformungs- oder Rastwiderstandes der Rasteinrichtung 15 bzw. der Federschenkel 16 beim Einsetzen und Hineindrücken des jeweiligen Eingriffsteils 12 mit den beiden Federschenkeln 16 wie auch beim Herausnehmen oder Auswechseln bewusst fest anzufassen. Dieses bewusste feste Anfassen der Filterkassette 2 ist insbesondere beim Herausnehmen und Entfernen der Filterkassette 2 von der Dunstabzugshaube 1 erforderlich und vorteilhaft, da hierdurch gewährleistet ist, dass die mit Kraft zum Lösen der Rasteinrichtung 15 insbesondere mit beiden Händen gehaltene und nahezu parallel zu der Ansaugfläche geführte Filterkassette 2 nicht herabfallen kann im Gegensatz zum Einsetzen oder Entnehmen einer Filterkassette, die eine solche Rasteinrichtung nicht aufweist und bei der eine Bedienperson aus Unachtsamkeit und mangelnder Bedienkraft die Filterkassette nicht ausreichend sicher hält.

Eine derartige im Wesentlichen oder ausschließlich an der Filterkassette 2 vorgesehene Rasteinrichtung 15 hat den Vorteil, dass eine solche Filterkassette 2 an einer üblichen Halterung oder Aufnahme einer Dunstabzugshaube 1 eingesetzt werden kann, insbesondere im Austausch gegen eine Filterkassette ohne eine solche Rasteinrichtung.

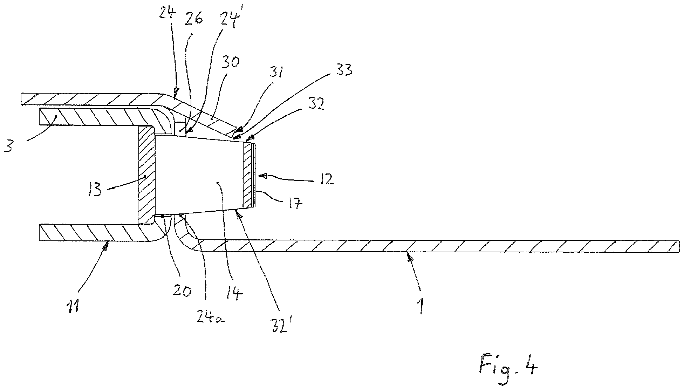

Am hinteren Gehäuserahmen 24 kann oberhalb der Gehäuserahmenöffnung 26 eine Abstützung wie z. B eine Stützlasche 30 vorgesehen sein (siehe Fig. 3 und 4), die sich vom Gehäuserahmen 24 derart über das eingesteckte Eingriffsteil 12 erstreckt, dass zwischen ihrem Vorderrand 31 und der Oberseite 32 des Eingriffsteils 12 ein geringer Spalt 33 verbleibt. Wenn die Filterkassette 2 entnommen wird und dabei nach dem Entriegeln der Riegelzapfen 7 an ihrem Vorderrand 5 geringfügig herabgeschwenkt wird, z. B. um einen Winkel von etwa 10 bis 20°, begrenzt die Stützlasche 30 den Schwenkwinkel, indem sich das Eingriffsteil 12 nach Schließen des Spaltes 33 an die Stützlasche 30 anlegt und ein weiteres Verschwenken der Filterkassette 2, insbesondere ein unbeabsichtigtes Herabschwenken, verhindert.

Die Oberseite 32 des Eingriffsteils 12 kann zusammen mit den beiden Federschenkeln 16 von der Basis 13 zur vorderen Stirnseite 17 hin leicht abgeschrägt sein (siehe Fig. 4), damit das anfängliche Einsetzen des Eingriffsteils 12 in die Gehäuserahmenöffnung 26 durch den reduzierten Querschnitt erleichtert ist, wobei bei eingeschobenem Eingriffsteil 12 die gewünschte Größe des Spaltes 33 eingestellt ist. Die Unterseite 32' des Eingriffsteils 12 kann ebenfalls mit der Neigung der Oberseite 32 gebildet sein, so dass das Eingriffsteil 12 auch in um 180° gedrehter Stellung in die Öffnung 20 am hinteren Rahmenteil 11 einsetzbar ist und mit dem Filterkassettenrahmen 3 verwendbar ist. Das Eingriffsteil 12 gleitet beim Einschieben in die Öffnung 26 des hinteren Gehäuserahmens 24 mit seiner Unterseite 32' auf dem die Öffnung 26 begrenzenden Unterrand 24a der Gehäuserahmenwand 24' des hinteren Gehäuserahmens 24.

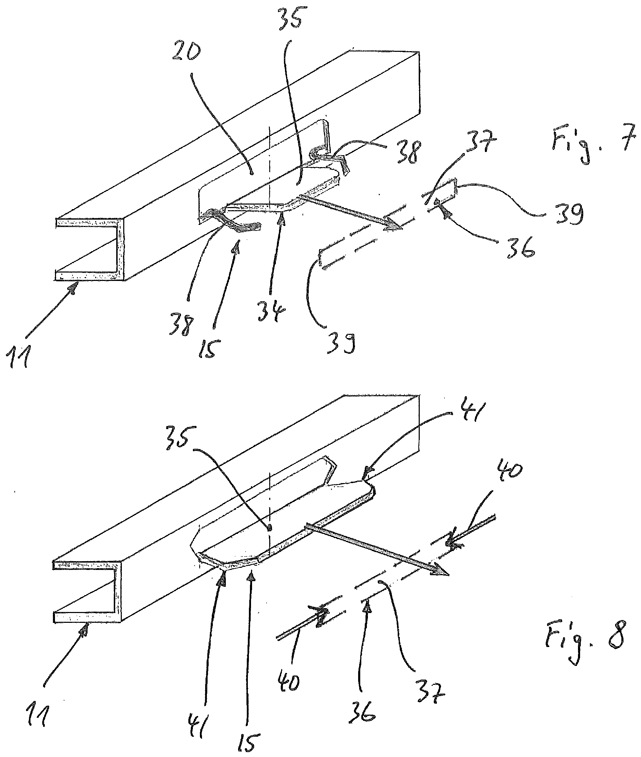

Fig. 7 zeigt ein weiteres Ausführungsbeispiel, bei dem am hinteren Rahmenteil 11 der Filterkassette 2 unterhalb der Öffnung 20 ein Eingriffsteil 34 in Gestalt einer zungenartigen Lasche 35 hervorsteht. Die zungenartige Lasche 35 greift beim Einsetzen an eine Dunstabzugshaube 1 in eine Aufnahme 36, die als an die Lasche 35 angepasster Schlitz 37 (in Fig. 7 nur schematisch dargestellt) im hinteren Gehäuserahmen 24 der Dunstabzugshaube 1 gebildet ist. Eine Rasteinrichtung 15 umfasst zwei Federn 38, die - ähnlich der Federschenkel 16 des ersten Ausführungsbeispiels - beidseits der Lasche 35 vom hinteren Rahmenteil 11 vorstehen und die, wenn die Lasche 35 in den Schlitz 37 gesteckt wird, in der schon beschriebenen Art und Weise am hinteren Gehäuserahmen 24 an den seitlichen Schlitzrändern 39 in federnder Rastabstützung sind.

Fig. 8 zeigt ein weiteres Ausführungsbeispiel, bei dem - in Abwandlung gegenüber dem Ausführungsbeispiel der Fig. 7 - die Rasteinrichtung 15 am hinteren Gehäuserahmen 24 der Dunstabzugshaube 1 angeordnet ist und zwei Federn oder Federschenkel 40 (schematisch durch zwei Pfeile dargestellt, die die Richtung der Federkraft symbolisieren) aufweist, die derart angeordnet sind, dass sie beim Einstecken des Eingriffsteils 34 bzw. der Lasche 35 in den Schlitz 37 in federkraftbelastetem Rastkontakt mit zwei seitlichen Haltenasen 41 sind, die an der Lasche 35 seitlich vorragen. Die Federkrafteinrichtung der Rasteinrichtung 15 ist somit am hinteren Gehäuserahmen 24 der Dunstabzugshaube 1 angeordnet und wirkt mit den Haltenasen 41 am Eingriffsteil 34 des Filterkassettenrahmens 3 der Filterkassette 2 zusammen.

Auch bei den Ausführungsbeispielen der Fig. 7 und 8 kann eine Abstützung oder eine Stützlasche 30 vorgesehen sein, die ein unerwünschtes Herabschwenken oder Herabkippen der Filterkassette 2 bei der Montage oder Demontage verhindern kann.

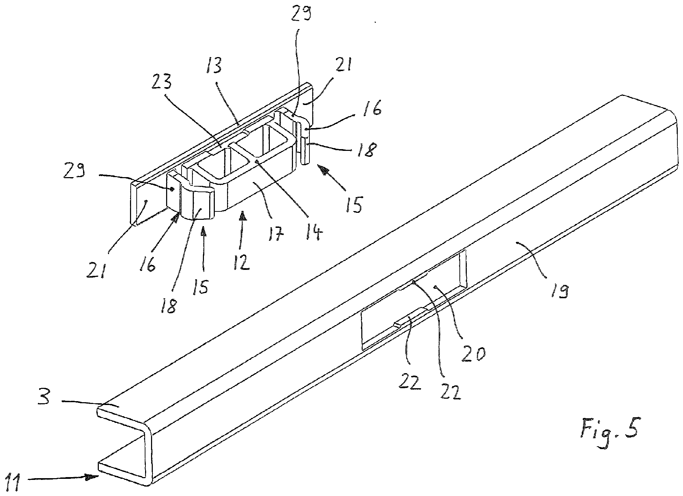

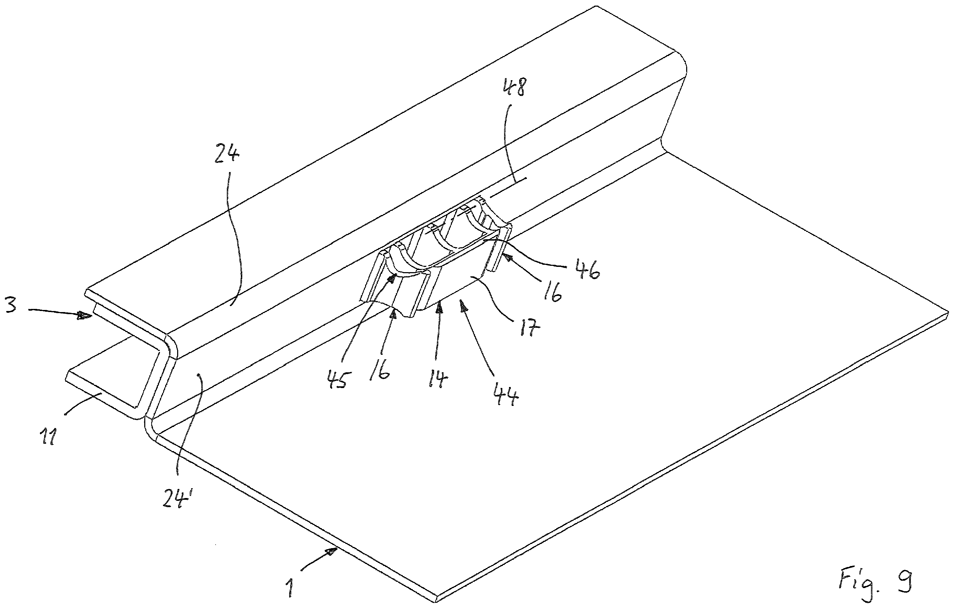

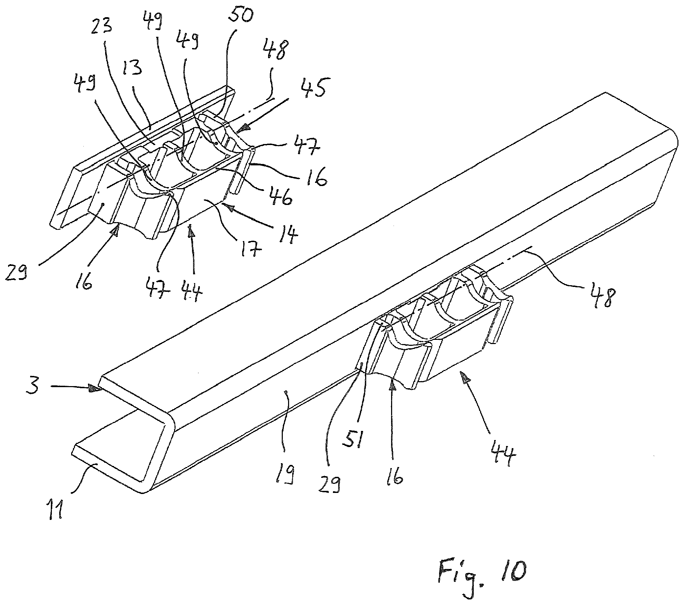

Eine in den Fig. 9 bis 11 dargestellte abgewandelte Ausführungsform der Befestigungsvorrichtung weist ein Eingriffsteil 44 auf, das gegenüber dem in Fig. 5 dargestellten Eingriffsteil 12 eine rinnenartige Vertiefung 45 zumindest an der Oberseite des zentralen Teils 14 und der beiden Federschenkel 16 oder zusätzlich auch an der Unterseite enthält. Die rinnenartige Vertiefung 45 ist derart gebildet, dass ein Steg 46 zumindest am Oberrand der Stirnseite 17 des zentralen Teils 14 und bevorzugt auch ein Endpunkt 47 an jedem Federschenkel 16 auf Höhe des Steges 46 verbleibt. Die rinnenartige Vertiefung 45 erstreckt sich vom Steg 46 zur Basis 13 hin bis zu einem Haltebereich 50 vor der Basis 13, der von der strichpunktiert dargestellten Linie 48 begrenzt ist und seine ursprüngliche an die Größe der Öffnung 20 angepasste Außenkontur entsprechend dem Eingriffsteil 12 (siehe Fig. 5) behält. Der zentrale Teil 14 ist z. B. als Hohlteil mit mehreren Wänden 49 gebildet, deren Oberrand jeweils in Gestalt der rinnenartigen Vertiefung 45 gebildet ist. Der zentrale Teil 14 kann auch aus vollem Material gebildet sein, das dann die rinnenartige Vertiefung 45 aufweist.

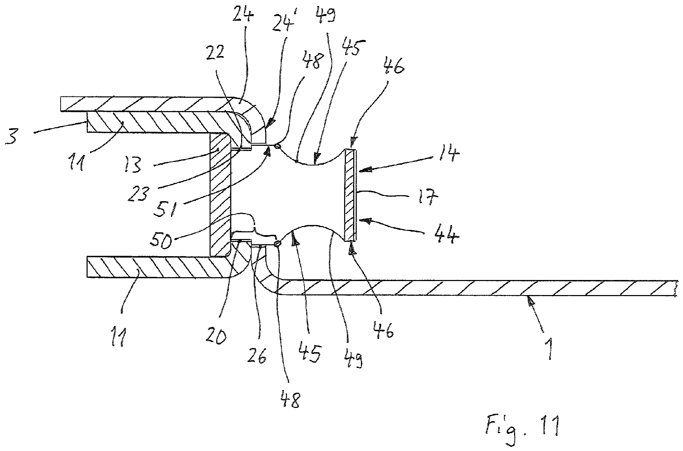

Das Eingriffsteil 44 ist in die Öffnung 20 des hinteren Rahmenteils 11 derart eingesetzt, dass ein Vorderabschnitt oder Zentrierabschnitt 51 des Haltebereichs 50 (siehe Fig. 11) vor die Stirnwand 19 des hinteren Rahmenteils 11 hinausragt. Beim Einsetzen der Filterkassette 2 an der Dunstabzugshaube 1 wird das Eingriffsteil 44 mit seinen Federschenkeln 16 durch die Gehäuserahmenöffnung 26, die in der der Stirnwand 19 zugeordneten Gehäuserahmenwand 24' angebracht ist, hindurch gesteckt, wobei zunächst bei schräg gehaltener Filterkassette 2 die beiden sich gegenüber liegenden Stege 46 durch die Gehäuserahmenöffnung 26 treten und danach die beiden rinnenartigen Vertiefungen 45 im Bereich der die Gehäuserahmenöffnung 26 begrenzenden Gehäuserahmenwand 24' angeordnet sind. Der durch die Vertiefungen 45 reduzierte Querschnitt des Eingriffsteils 44 erlaubt eine Schrägstellung der Filterkassette 2 relativ zu ihrer Einbaulage an der Dunstabzugshaube 1 in der Gehäuserahmenöffnung 26, wobei gleichzeitig die Rinnenform der beiden Vertiefungen 45 ein selbständiges Festhalten der Filterkassette 2 am Gehäuserahmen 24 mittels des Eingriffsteils 44 ermöglicht. Beim vollständigen Einschieben des Eingriffsteils 44 in die Gehäuserahmenöffnung 26 und gleichzeitigen Einschwenken der Filterkassette 2 in ihre Filterstellung an der Dunstabzugshaube 1 wird das Eingriffsteil 44 mit seinem Vorderabschnitt oder Zentrierabschnitt 51 in der Gehäuserahmenöffnung 26 in Querrichtung (senkrecht zur Längserstreckung des hinteren Rahmenteils 11) zentriert und durch die Federschenkel 16 mit ihren Basisabschnitten 29 in Richtung der Längserstreckung des hinteren Rahmenteils 11 zentriert. Eine Stützlasche 30 am hinteren Gehäuserahmen 24, wie sie in den Fig. 3 und 4 dargestellt ist, ist für die Funktion dieses Eingriffsteils 44 nicht erforderlich und kann daher entfallen, jedoch kann eine Stützlasche 30 auch mit diesem Eingriffsteil 44 verwendet werden und die Funktion des Eingriffsteils 44 unterstützen.

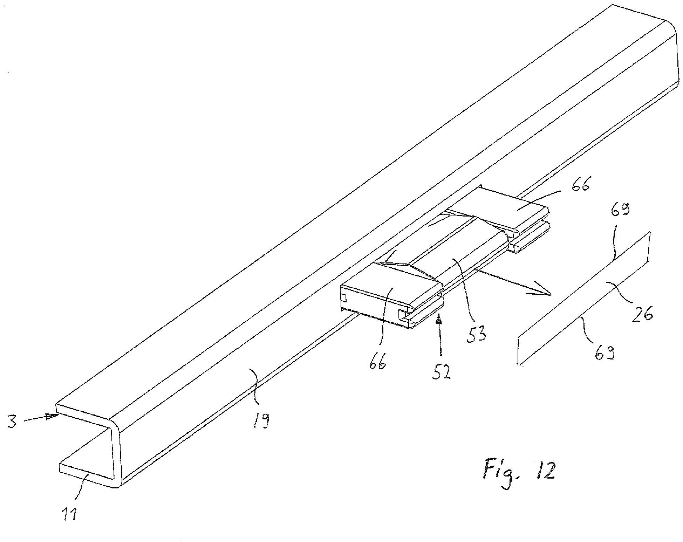

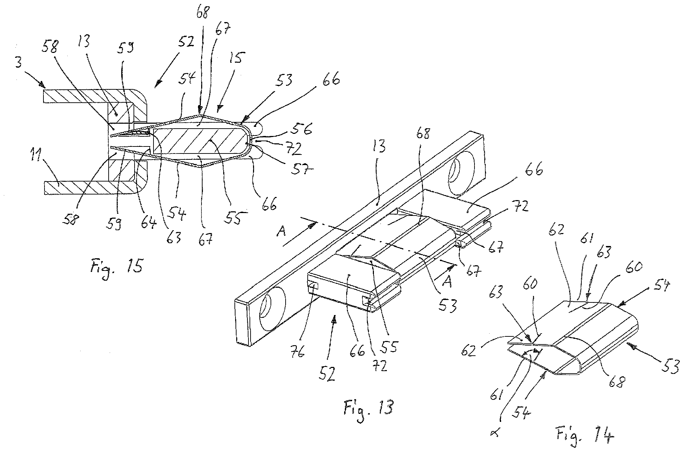

Eine weitere in den Fig. 12 bis 15 dargestellte abgewandelte Ausführungsform der Befestigungsvorrichtung weist ein Eingriffsteil 52 mit einer Rasteinrichtung 15 auf, die eine Blattfeder 53 enthält. Die Blattfeder 53 ist in der Art einer Klammer oder eines Clips mit zwei Federschenkeln 54 gebildet und auf einen zentralen Halteabschnitt 55 des Eingriffsteils 52 aufgeschoben, so dass die Federbasis 56 den Vorderrand 57 des Halteabschnitts 55 umgreift und die beiden Federschenkel 54 beidseits des Halteabschnitts 55 zur Basis 13 verlaufen. In der Basis 13 ist für jeden Federschenkel 54 eine z. B. schlitzartige Ausnehmung 58 gebildet, in die der jeweilige Federschenkel 54 mit seinem Endabschnitt 59 eingesetzt ist. Jeder Federschenkel 54 enthält zwei Schlitze 60, die sich von jedem Seitenrand 61 gegeneinander einwärts erstrecken, z. B. unter einem Winkel α kleiner 90°, z. B. 75°. Die beiden Seitenrandbereiche 62 des Endabschnitts 59 sind an ihrer spitzwinkligen Ecke 63 einwärts gebogen, so dass sich diese Ecke 63 in einer Stufe 64 der Ausnehmung 58 abstützt und damit die Blattfeder 53 gegen Herausziehen gesichert ist (nur in Fig. 15 ist die Ecke 63 des oberen Federschenkels 54 in ihrer verriegelnden Stützstellung an der Stufe 64 dargestellt).

Der zentrale Halteabschnitt 55 des Eingriffsteils 52 weist eine geringere Dicke als die beiden seitlichen Eingriffsteil-Endabschnitte 66 auf, so dass jeder Federschenkel 54 zwischen den beiden schmalen Stirnflächen 67 jedes der zwei Eingriffsteil-Endabschnitte 66 zentriert gehalten ist.

Die beiden Federschenkel 54 sind derart dachartig vorgeformt, dass sie sich (siehe Querschnittsansicht der Fig. 15) ausgehend von der Federbasis 56 zu ihren Endabschnitten 59 hin zunächst voneinander entfernen und in einer Federschulter 68 ihren maximalen Abstand aufweisen. Von der Federschulter 68 ausgehend nähern sich die beiden Federschenkel 54 zu ihrem Endabschnitt 59 hin wieder aneinander an.

Das Eingriffsteil 52 ist in der Öffnung 20 des hinteren Rahmenteils 11 eingesetzt (siehe Fig. 15) und darin entsprechend dem Eingriffsteil 12 (siehe Fig. 6) fest angebracht.

Beim Einsetzen der Filterkassette 2 an der Dunstabzugshaube 1 wird das Eingriffsteil 52 mit der Blattfeder 53 durch die Gehäuserahmenöffnung 26 (in Fig. 12 schematisch dargestellt) in der Gehäuserahmenwand 24' hindurch gesteckt, wobei bei schräg gehaltener Filterkassette 2 die beiden Federschenkel 54 in Gleitkontakt an den beiden sich gegenüber liegenden und die Gehäuserahmenöffnung 26 begrenzenden Rändern 69 der Gehäuserahmenwand 24' sind. Der Abstand der beiden Federschenkel 54 zwischen ihren Federschultern 68 ist größer als die Höhe der Gehäuserahmenöffnung 26 zwischen ihren Rändern 69, so dass die Federschenkel 54 gegeneinander gedrückt werden, während sie mit ihren Federschultern 68 in die Gehäuserahmenöffnung 26 eingeschoben werden und hierbei eine Feder- oder Rastkraft zum federelastischen Verformen der Federschenkel 54 überwunden werden muss. Wenn die Filterkassette 2 in der schräg gestellten Montagestellung gänzlich an den Gehäuserahmen 24 angelegt worden ist, befinden sich die Ränder 69 der Gehäuserahmenwand 24' in demjenigen Bereich, in dem die Federschenkel 54 wieder näher zueinander angeordnet sind und im Kontakt mit der Gehäusewand 24 nur mit geringer oder gar keiner Feder- oder Rastkraft belastet sind. Die Federschenkel 54 sind mit einer solchen Federkraft gegen ihre Verformung eingestellt, dass die Blattfeder 53 die Filterkassette 2 in ihrer Schrägstellung an der Gehäuserahmenwand 24' halten kann, auch wenn eine Bedienperson die Filterkassette 2 absichtlich oder unabsichtlich nicht festhält. Beim Einsetzen muss demnach eine Feder- oder Rastkraft überwunden werden, bevor die Filterkassette 2 in ihre Einbaustellung eingeschwenkt wird. Zum Entfernen der Filterkassette 2 vom Dunstabzugsgehäuse 1 wird die Filterkassette 2 von der Bedienperson nach dem manuellen Entriegeln mittels des Handgriffs 6 an ihrem Vorderrand 5 in ihre schräg gestellte Montagestellung herausgeschwenkt und manuell aus der Aufnahme 25 bzw. der Gehäuserahmenöffnung 26 herausgezogen, wobei die Feder- oder Rastkraft der Blattfeder 53 überwunden werden muss.

Die Feder- oder Rastfederkraft wirkt bei dieser Blattfeder 53 somit senkrecht zur Ebene der Filterkassette 2.

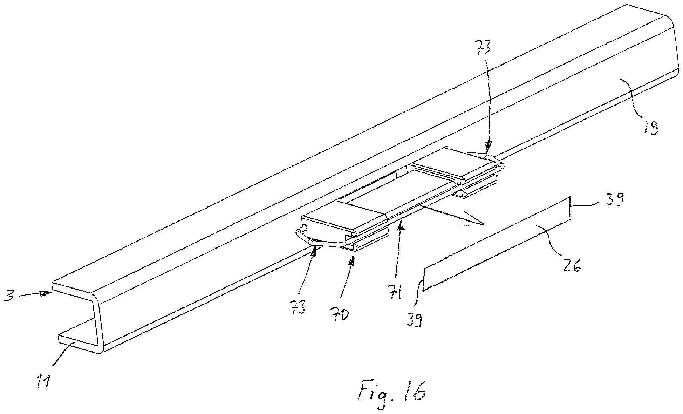

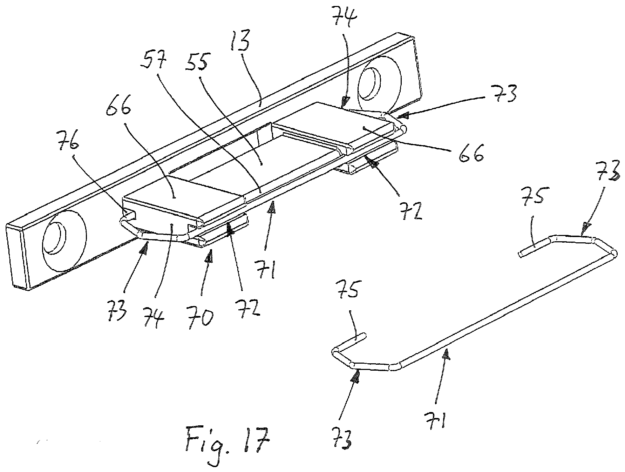

Eine in den Fig. 16 und 17 dargestellte abgewandelte Ausführungsform der Befestigungsvorrichtung weist ein Eingriffsteil 70 auf, das im Wesentlichen dem Eingriffsteil 52 gemäß der Ausführungsform der Fig. 12 bis 15 entspricht, jedoch eine Bügelfeder 71 als Rasteinrichtung anstatt der Blattfeder 53 enthält. Die Bügelfeder 71, z. B. eine Drahtbügelfeder, ist am Eingriffsteil 70 beispielsweise derart angebracht, dass sie mit ihrem zentralen linearen Abschnitt in einer Nut 72 (siehe auch die Darstellungen der Fig. 13 und 15) an jedem der beiden Eingriffsteil-Endabschnitte 66 eingelegt ist und sich entlang des Vorderrandes 57 des zentralen Halteabschnitts 55 des Eingriffsteils 70 erstreckt. Die beiden endseitigen Federbügel 73 sind in etwa U-förmig gebogen und greifen über die beiden Außenflächen 74 des Eingriffsteils 70 bzw. der Eingriffsteil-Endabschnitte 66. Die gegeneinander zurückgebogenen Bügelenden 75 sind in Lagernuten 76 oder Bohrungen eingesetzt, die in den Außenflächen 74 des Eingriffsteils 70 unmittelbar vor der Basis 13 gebildet sind. Das Eingriffsteil 70 ist am hinteren Rahmenteil 11 des Filterkassettenrahmens 3 entsprechend dem Eingriffsteil 52 des voranstehend beschriebenen Ausführungsbeispiel angebracht. Das Entnehmen wie auch das Einsetzen der Filterkassette 2 von der bzw. an die Dunstabzugshaube 1 erfolgt grundsätzlich entsprechend dem voranstehend beschriebenen Ausführungsbeispiel, wobei die Feder- oder Rastfederkraft der Bügelfeder 71 in horizontaler Richtung parallel zum hinteren Rahmenteil 11 des Filterkassettenrahmens 3 beim Eingriff der sich verformenden Federbügel 73 an den schmalseitigen Schlitz- oder Öffnungsrändern 39 der Gehäuserahmenöffnung 26 wirkt.

Das Eingriffsteil 70 bzw. 52 kann zur Aufnahme sowohl der Blattfeder 53 wie auch der Bügelfeder 71 gemäß den Fig. 12 bis 17 identisch gebildet sein, z. B. als Kunststoff-Spritzgussteil. Andererseits können auch spezielle Gestaltungen der Eingriffsteile 52 und 70 mit für die Aufnahme der Blattfeder wie auch der Bügelfeder angepassten Konfigurationen zweckmäßig sein.

Die in der Beschreibung und anhand der Ausführungsbeispiele sowie in den Figuren offenbarten einzelnen Merkmale können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Dunstabzugshaube | 29 | Basisabschnitt |
| 2 | Filterkassette | 30 | Stützlasche |
| 3 | Filterkassettenrahmen | 31 | Vorderrand |
| 4 | Streckmetalllage | 32 | Oberseite |
| 5 | Vorderrand | 32' | Unterseite |
| 6 | Handgriff | 33 | Spalt |
| 7 | Riegelzapfen | 34 | Eingriffsteil |
| 8 | vorderes Rahmenteil | 35 | Lasche |
| 9 | vorderer Gehäuserahmen | 36 | Aufnahme |
| 10 | Hinterrand | 37 | Schlitz |
| 11 | hinteres Rahmenteil | 38 | Feder |
| 12 | Eingriffsteil | 39 | Schlitzrand |
| 13 | Basis | 40 | Federschenkel |
| 14 | zentrales Teil | 41 | Haltenase |
| 15 | Rasteinrichtung | 42 | Ansaugfläche |
| 16 | Federschenkel | 43 | Hand |
| 17 | Stirnseite | 44 | Eingriffsteil |
| 18 | Vorderabschnitt | 45 | Vertiefung |
| 19 | Stirnwand | 46 | Steg |
| 20 | Öffnung | 47 | Endpunkt |
| 21 | Anlagebund | 48 | Linie |
| 22 | Haltesteg | 49 | Wand |
| 23 | Vertiefung | 50 | Haltebereich |
| 24 | hinterer Gehäuserahmen | 51 | Vorderteil oder Zentrierabschnitt |
| 24' | Gehäuserahmenwand | | |
| 24a | Unterrand | 52 | Eingriffsteil |
| 25 | Aufnahme | 53 | Blattfeder |
| 26 | Gehäuserahmenöffnung | 54 | Federschenkel |
| 27 | Ausbauchung | 55 | Halteabschnitt |
| 28 | Rand | 56 | Federbasis |
| 57 | Vorderrand | 67 | Stirnfläche |
| 58 | Ausnehmung | 68 | Federschulter |
| 59 | Endabschnitt | 69 | Rand |
| 60 | Schlitz | 70 | Eingriffsteil |
| 61 | Seitenrand | 71 | Bügelfeder |
| 62 | Seitenrandbereich | 72 | Nut |
| 63 | Ecke | 73 | Federbügel |
| 64 | Stufe | 74 | Außenfläche |
| | | 75 | Bügelende |
| 66 | Eingriffsteil-Endabschnitt | 76 | Lagernut |

## Patentansprüche

1. Filterkassetten-Befestigungsvorrichtung zum lösbaren Festlegen einer Filterkassette (2) an einer Dunstabzugshaube (1),
wobei die Filterkassetten-Befestigungsvorrichtung zumindest ein an einem Filterkassettenrahmen (3) insbesondere vorstehend angeordnetes Eingriffsteil (12) und die Dunstabzugshaube (1) eine Aufnahme (25) aufweist, die das Eingriffsteil (12) beim Einsetzen der Filterkassette (2) an der Dunstabzugshaube (1) aufnimmt,
**dadurch gekennzeichnet,**
**dass** die Filterkassetten-Befestigungsvorrichtung eine Rasteinrichtung (15) aufweist, die das Eingriffsteil (12; 34; 44; 52; 70) mit beim Einsetzen und beim Entnehmen der Filterkassette (2) zu überwindender Rastkraft an der Aufnahme (25; 36) an der Dunstabzugshaube (1) in Raststellung hält.

2. Filterkassetten-Befestigungsvorrichtung nach Anspruch 1,
**dadurch gekennzeichnet, dass** die die Rastkraft bereitstellende Rasteinrichtung (15) an einem hinteren Rahmenteil (11) des Filterkassettenrahmens (3) am Hinterrand (10) der Filterkassette (2) und / oder an der Dunstabzugshaube (1) angeordnet ist.

3. Filterkassetten-Befestigungsvorrichtung nach Anspruch 1 oder 2,
**dadurch gekennzeichnet, dass** die Rasteinrichtung (15) zumindest eine Federeinrichtung (16, 38, 40; 53; 71) oder ein Federelement aufweist.

4. Filterkassetten-Befestigungsvorrichtung nach einem der Ansprüche 1 bis 3,
**dadurch gekennzeichnet, dass** die Rasteinrichtung (15) am Eingriffsteil (12) der Filterkassette (2) vorgesehen oder gebildet ist.

5. Filterkassetten-Befestigungsvorrichtung nach einem der Ansprüche 1 bis 4,
**dadurch gekennzeichnet, dass** das Eingriffsteil (12) mit der Rasteinrichtung (15) einstückig gebildet ist.

6. Filterkassetten-Befestigungsvorrichtung nach einem der Ansprüche 1 bis 5,
**dadurch gekennzeichnet, dass** das Eingriffsteil (12) mit der Rasteinrichtung (15) am Filterkassettenrahmen (3), insbesondere in einer Ausnehmung oder Öffnung (20) des Filterkassettenrahmens (3), angebracht ist.

7. Filterkassetten-Befestigungsvorrichtung nach einem der Ansprüche 1 bis 6,
**dadurch gekennzeichnet, dass** die Rasteinrichtung (15) eine an einem Gehäuserahmen (24) der Dunstabzugshaube (1) angeordnete Federeinrichtung (40) aufweist, die mit Haltenasen (41) eines Eingriffsteils (34) oder einer Lasche (35) am Filterkassettenrahmen (3) zusammenwirkt.

8. Filterkassetten-Befestigungsvorrichtung nach einem der Ansprüche 1 bis 6,
**dadurch gekennzeichnet, dass** die Rasteinrichtung (15) eine Blattfeder (53) oder eine Bügelfeder (71) aufweist, die an einem jeweiligen Eingriffsteil (52 bzw. 70) gelagert sind, wobei insbesondere die beiden Eingriffsteile (52, 70) für die Blattfeder (53) und die Bügelfeder (71) gleichartig gebildet sind.

9. Filterkassetten-Befestigungsvorrichtung nach einem der Ansprüche 1 bis 8,
**dadurch gekennzeichnet, dass** beim Einsetzen und beim Entnehmen der Filterkassette (2) die Rastkraft der Rasteinrichtung (15) durch eine Längsbewegung der Filterkassette (2) zu überwinden ist.

10. Filterkassetten-Befestigungsvorrichtung nach einem der Ansprüche 1 bis 9,
**dadurch gekennzeichnet, dass** eine Abstützung oder eine Stützlasche (30) vorgesehen ist, die eine Schwenkbewegung der an der Aufnahme (15) angeordneten Filterkassette (2) relativ zur Dunstabzugshaube (1) durch Stützeingriff am Eingriffsteil (12) begrenzt.
